Europäisches Patentamt

European Patent Office

Office européen des brevets

(19)

(11) Veröffentlichungsnummer: **0 215 302 B1**

## (12) EUROPÄISCHE PATENTSCHRIFT

(45) Veröffentlichungstag der Patentschrift:
05.06.91 Patentblatt 91/23

(51) Int. Cl.$^5$: **G01N 9/08**

(21) Anmeldenummer: **86111263.9**

(22) Anmeldetag: **14.08.86**

(54) Einrichtung zur absoluten Dichtebestimmung nach der Auftriebsmethode.

(30) Priorität: **16.08.85 DE 3529490**

(43) Veröffentlichungstag der Anmeldung:
**25.03.87 Patentblatt 87/13**

(45) Bekanntmachung des Hinweises auf die
Patenterteilung:
**05.06.91 Patentblatt 91/23**

(84) Benannte Vertragsstaaten:
**DE FR GB**

(56) Entgegenhaltungen:
**GB-A- 1 195 734**
**US-A- 3 246 524**
**US-A- 4 320 658**

(73) Patentinhaber: **Max-Planck-Gesellschaft zur
Förderung der Wissenschaften e.V.
Bunsenstrasse 10
W-3400 Göttingen (DE)**

(72) Erfinder: **Craubner, Hans, Prof. Dr.
Gausstrasse 62
W-7000 Stuttgart 1 (DE)**

(74) Vertreter: **von Bezold, Dieter, Dr. et al
Dr. Dieter von Bezold Dipl.-Ing. Peter Schütz
Dipl.-Ing. Wolfgang Heusler Brienner Strasse
52
W-8000 München 2 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 215 302 B1

## Beschreibung

Die vorliegende Erfindung betrifft eine Einrichtung zur Dichtebestimmung kondensierter Stoffe nach der hydrodynamischen Auftriebsmethode mit einer Waage, welche einen Kraftgeberteil und ein an diesen durch ein Verbindungselement aufgehängtes Meßgehänge enthält, ferner mit einem gasdichten Gehäuse, welches einen Wägeraum, in dem der Kraftgeberteil der Waage angeordnet ist, und einen Meßraum mit einem zur Aufnahme einer Auftriebsflüssigkeit dienenden Meßgefäß, in das sich das Meßgehänge erstreckt, bildet, und mit einem Vakuumsystem, das an dem Wägeraum angeschlossen ist, und mit einer Trennvorrichtung, die zwischen dem Meßraum (24) und dem Wägeraum (22) angeordnet ist und vom Verbindungselement (32a) des Meßgehänges durchsetzt ist.

Die Dichte, also das Verhältnis von Masse zu Volumen eines Stoffes, ist eine besonders wichtige intensive Stoffkenngröße. Für viele wissenschaftliche und technische Untersuchungen ist die Dichte von kondensierten Stoffen, wie Festkörpern und Flüssigkeiten, sowie die Druck- und/oder Temperaturabhängigkeit der Dichte von großer Bedeutung.

Eine bekannte Methode zur Dichtemessung ist die sogenannte Auftriebsmethode, bei der die Dichte aus der Gewichtsabnahme beim Eintauchen in eine spezifisch leichtere Flüssigkeit ermittelt wird. Man kann sich hierzu einer elektronischen Waage bedienen, welche ein Kraftmeßsystem, ferner ein an diesem durch einen Draht aufgehängtes Meßgehänge mit einem oberen und einem unteren Wiegegutbehälter (Waagschale) und ein Gehäuse enthält, welches einen das Kraftmeßsystem enthaltenden Raum ("Wägeraum") und einen das Meßgehänge enthaltenden Raum ("Meßraum"), der bis zu einer Höhe zwischen den beiden Wiegegutbehältern mit einer geeigneten Auftriebsflüssigkeit gefüllt ist, bildet.

Aus GB-A-1195734 ist eine nach der oben angegebenen Methode arbeitende Einrichtung zur Dichtebestimmung bekannt, welche eine Balkenwaage enthält, deren Waagebalken auf einer Grundplatte eines evakuierbaren Gehäuses angeordnet ist. Die Grundplatte hat zwei Löcher, durch die sich ein Meßgehänge bzw. ein Kompensationsgehänge in ein Meßgefäß bzw. einen rohrförmigen Gehäuseteil erstrecken. Das Meßgefäß weist oben eine Schliffverbindung auf und unten einen Raum zur Aufnahme einer Auftriebsflüssigkeit, es ist außerdem mit einem Anschluß für eine Vakuumpumpe, einem Stutzen zur Einführung eines Thermometers und einer Schliffverbindung für ein Gefäß zum Einführen der Auftriebsflüssigkeit versehen.

Mit den bekannten Einrichtungen zur Dichtemessung bei Festkörpern und Flüssigkeiten ist es allgemein schwierig, vor allem bei Mikroproben, eine Meßgenauigkeit bis zur 4. oder 5. Dezimale und darüber hinaus zu erreichen, insbesondere wenn die Dichte bei einer von der normalen Raumtemperatur (21°C) abweichenden Temperatur oder in einem größeren Temperaturbereich gemessen werden soll. Außerdem ist die Meßrate meist relativ klein. Deshalb ist es meist schwierig, den für die Untersuchung funktioneller Abhängigkeiten von der Temperatur der Konzentration, molekularen Struktur und Strukturänderungen notwendigen Datenumfang auch z.B. mit Mikroproben in angemessener Zeit mit der notwendigen Genauigkeit zu bestimmen.

Die vorliegende Erfindung löst die Aufgabe, eine Einrichtung der eingangs genannten Art dahingehend weiterzubilden, daß mit ihr sehr genaue absolute Dichtemessungen sowohl bei Temperaturen, die erheblich von der normalen Raumtemperatur abweichen, als auch in weiten Temperaturbereichen durchgeführt werden können, dadurch daß die Trennvorrichtung auf der dem Wägeraum zugewandten Seite dynamisch mit einem Druckregel-System, das im Wägeraum einen konstanten Schutzgasdruck aufrechtzuerhalten gestattet, verbunden und auf der dem Meßraum zugewandten Seite mit einer Kühlvorrichtung zur Abscheidung von Dämpfen der Auftriebsflüssigkeit versehen ist, wodurch der übertritt von Dämpfen der Auftriebsflüssigkeit vom Meßraum in den Wägeraum verhindert, ein Austausch von permanentem Schutzgas zwischen Wägeraum und Meßraum selbsttätig möglich ist.

Die erwähnte Trennvorrichtung ermöglicht den übergang von Schutzgas, wie z.B. Stickstoff oder Edelgas, wie Helium oder Argon, und dergl. vom Wägeraum zum Meßraum, verhindert jedoch, daß kondensierbare Gase und/oder Dämpfe, z.B. der im Meßraum enthaltenen Auftriebsflüssigkeit, in umgekehrter Richtung vom Meßraum in den Wägeraum gelangen können. Ein Stoff- und Wärmeaustausch vom Meßraum in Richtung Wägeraum sowie ein Wärmeübergang vom Wägeraum in Richtung Meßraum sind somit bei thermischem Gleichgewicht des Systems ausgeschlossen. Zugelassen, unter Umständen sogar erwünscht, ist dagegen ein Stoffübergang in Form von Schutzgas in der Richtung von Wäge- zu Meßraum im Falle einer Änderung der thermodynamischen Zustandsbedingungen im Meß- und-/oder Wägeraum. Die Trennvorrichtung ermöglicht es, die Temperatur im Meßraum bei konstantem Meßdruck in weiten Grenzen zu ändern und zwar unbeeinflußt von den speziellen Zustandsbedingungen im Wägeraum, die zweckmäßigerweise Während eines ganzen Meßzyklus konstant gehalten werden, beispielsweise auf konstantem Druck bei Raumtemperatur.

Mit der erfindungsgemäßen Einrichtung kann dadurch die Temperaturabhängigkeit der Dichte, des Volumens und der thermischen Ausdehnung von Festkörpern und Flüssigkeiten in einem weiten Temperaturbereich, z. B. von etwa −100°C bis etwa + 300°C bestimmt werden. Die Durchführung von Dichtewessüngen läßt sich bei Verwendüng der erfindüngsgemäßen Einrichtung verglichen mit dem Stand der Technik ganz wesentlich beschleunigen. Durch Verwendung geeigneter flüssiger Auftriebsmedien, wie z.B. Isopentan, verflüssigten Gasen, z.B. Argon oder Stickstoff, usw. oder von hochsiedenden Flüssigkeiten, wie ölen, insbesondere Siliconöl, kann der Meßbereich darüber hinausgehend noch wesentlich weiter nach tiefen als auch nach hohen Temperaturen ausgedehnt werden als beim Stand der Technik.

Die Messungen können mit kleinen Probenmengen schnell und genaü durchgeführt werden z.B. 1 bis 1000 mg, vorzugsweise 5 bis 500 mg bei festen Stoffen bzw. 6 bis 100 cm³ bei flüssigen Stoffen. Es können auch empfindliche Substanzen gemessen werden, und die Messungen können unabhängig von Form und Gestalt der Probe durchgeführt werden, z.B. mit festen Körpern ebenso wie mit Pulver, Granulat, Folien, Fasern sowie gelösten Feststoffen.

Ein besonderer Vorteil der vorliegenden Einrichtung besteht darin, daß die Dichtemessungen auch dynamisch, sowohl kontinuierlich als auch quasi-kontinuierlich nach Art eines Scanning-Verfahrens vorgenommen werden können, mit einem Temperaturgradienten als thermodynamischer Triebkraft. Dies ist besonders bei Untersuchungen von Phasenumwandlungen, molekularen Strukturänderungen und dergl. von Vorteil, z.B. bei partiell amorph-kristallinen bzw. amorphen Feststoffen wie metallischen "Gläsern", keramischen Massen, Polymeren sowie bei flüssigen und festen Mehrkomponentensystemen, Phasentrennungen in solchen, ferner bei Lösungs- und Hydrationseffekten usw.

Im folgenden wird ein bevorzugtes Ausführungsbeispiel der erfindungsgemäßen Dichtemeßeinrichtung unter Bezugnahme auf die Zeichnungen näher erläutert, dabei werden noch weitere Merkmale, Weiterbildungen und Vorteile der Erfindung zur Sprache kommen. Es zeigen :

Fig. 1 eine schematische Darstellung wesentlicher Teile einer Dichtemeßeinrichtung gemäß einer Ausführungsform der Erfindung ;

Fig. 2 ein Blockschaltbild eines Steuer- und Anzeigeteiles der Einrichtung gemäß Fig. 1 ;

Fig. 3 eine genauere Darstellung eines bevorzugten Meßgefäßes der Einrichtung gemäß Fig. 1 ;

Fig. 4 eine abgehandelte Ausführungsform eines Meßgefäßes für die Einrichtung gemäß Fig. 1,

Fig. 5 eine genauere Darstellung einer thermodynamischen Separatoroder Trennvorrichtung der Einrichtung gemäß Fig. 1.

Fig. 6 ein Viermantel-Meßgefäß für die Einrichtung gemäß der Erfindung und

Fig. 7 ein Schnitt in einer Ebene A-B der Fig. 6.

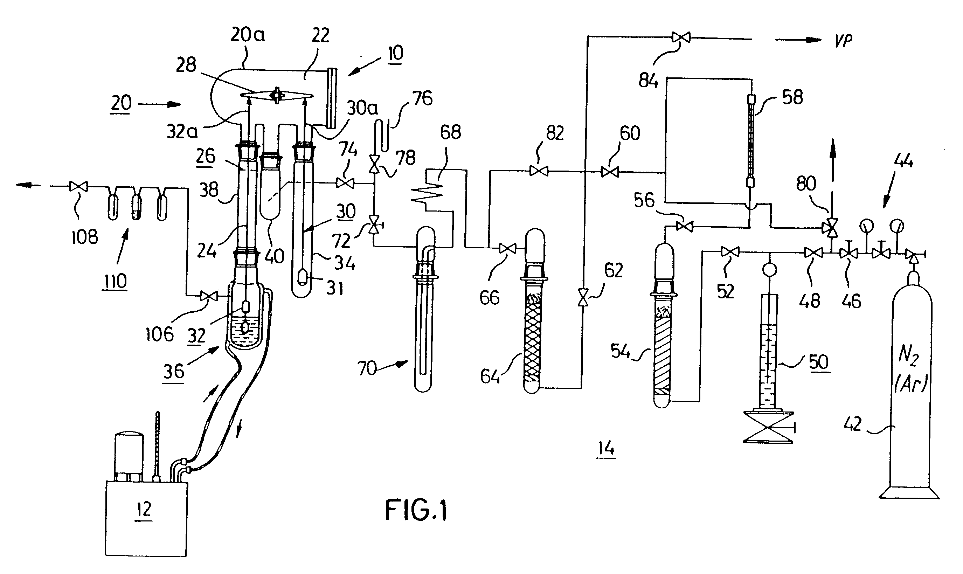

Der in Fig. 1 dargestellte Teil der vorliegenden Dichtemeßeinrichtung enthält im wesentlichen drei Baugruppen :

1) einen Meß- oder Kraftgeberteil einer elektronischen Waage 10,

2) eine Baugruppe 12 zur Steuerung, Regelung und Messung der Versuchstemperaturen und

3) ein Schutzgas- und Vakuumsystem 14.

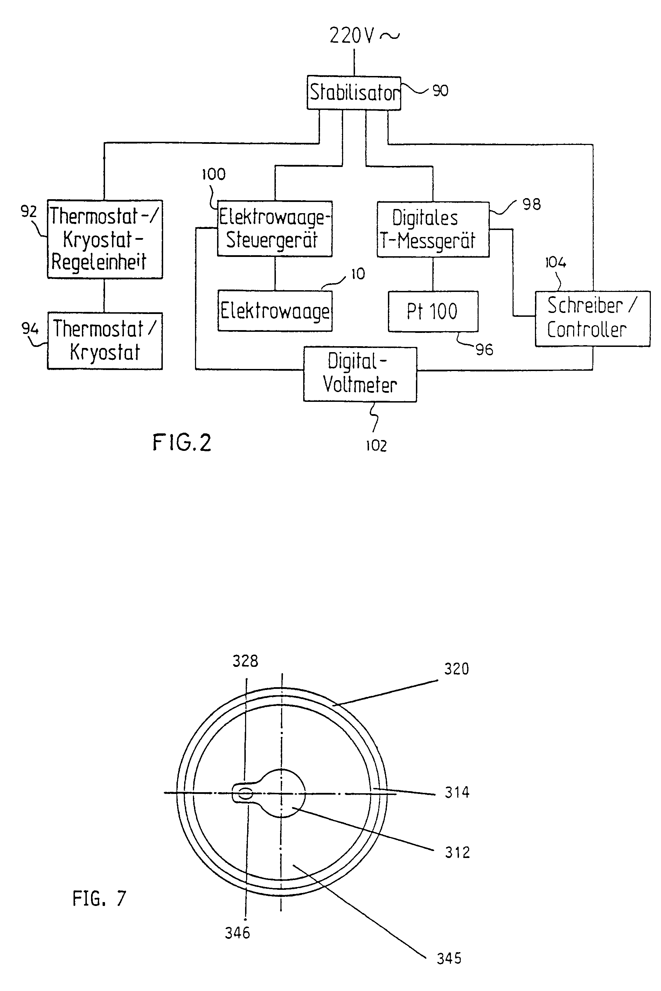

Die Einrichtung enthält ferner elektronische Steuer-, Datenerfassungs-, Auswerte-, Anzeige- und Registriervorrichtungen, auf die bei der Erläuterung der Fig. 2 noch näher eingegangen wird.

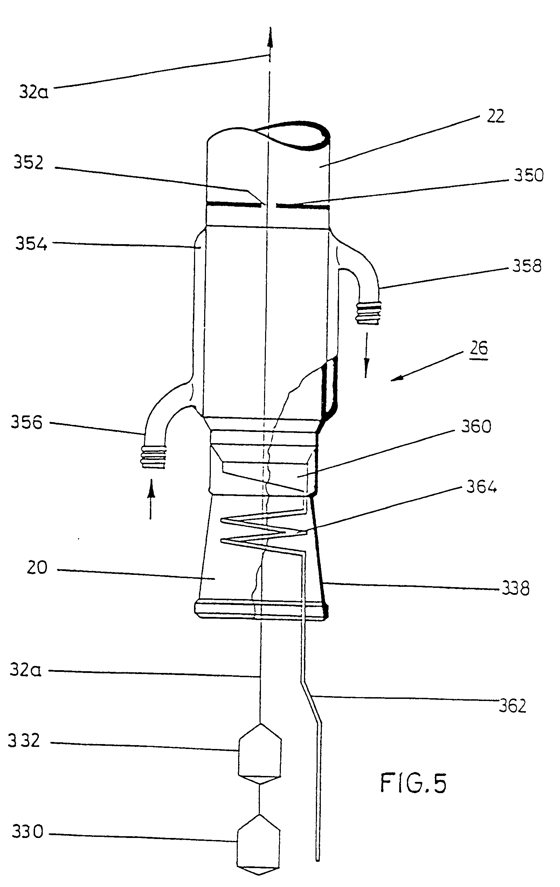

Als elektronische Waage kann ein bekanntes, z.B. nach dem Prinzip der elektromagnetischen Kraftkompensation arbeitendes Gerät (Cahn RG, Fisher Scientific Instruments, München) verwendet werden, das jedoch in der unten noch zu beschreibenden Weise abgewandelt ist. Der Meßteil 10 der elektronischen Waage weist ein vakuumdichtes Gehäuse 20 auf, welches einen Wägeraum 22 und einen Meßraum 24 umschließt, zwischen denen, gemäß einem wesentlichen Merkmal der vorliegenden Erfindung, eine Separator- oder Trennvorrichtung 26 angeordnet ist, auf die unter Bezugnahme auf Fig. 5 noch näher eingegangen wird.

In einem zum Wägeraum 22 gehörenden Hauptteil 20a des Gehäuses 20, dem Waagenraum, ist ein zweiarmiger, in der Mitte drehbar gelagerter Waagbalken 28 angeordnet, der zu einer Kraftgeberanordnung der Waage gehört und an dessen beiden Enden ein Wägegehänge 30 bzw. ein Meßgehänge 32 durch dünne Drähte 30a bzw. 32a oder andere Verbindungselemente aufgehängt sind. Die Drähte können einen Durchmesser von 0,1 mm haben und z.B. aus einer Cr-Ni-, Au-Ni-, Pt-Ir-Legierung etc. bestehen.

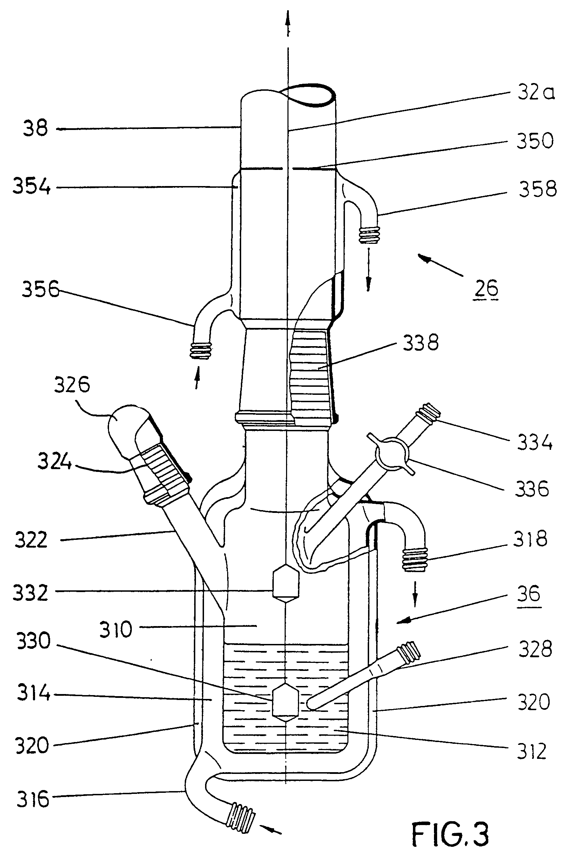

Das Wägegehänge 30 weist eine Waagschale 31 zur Auflage von Kompensationsgewichten auf und wird von einem zum Wägeraum gehörenden, unten geschlossenen Schutzrohrteil 34 des Gehäuses 20 umschlossen. Das Meßgehänge 32 erstreckt sich in ein zum Meßraum 24 gehörendes Meßgefäß 36, das anhand von Fig. 3 noch näher erläutert werden wird. Das Meßgefäß 36 ist über ein Schutzrohr 38, durch das sich der Draht 32a des Meßgehänges erstreckt, mit dem Hauptteil 20a des Gehäuses verbunden. Der Hauptteil 20a des Gehäuses weist außerdem einen Anschlußtzen 40 auf, an den ein Vakuum- und Schutzgassystem 14 angeschlossen ist, welches in erster Linie dazu dient, im Gehäuse 20 eine gewünschte Atmosphäre z.B. Schutzgasatmosphäre unter absolutem Feuchteausschluß, mit einem vorgegebenen, konstanten Druck aufrechtzuerhalten. Die Gehäuseteile 20a, 34, 36, 38, 40 bestehen bei dem dargestellten Ausführungsbeispiel aus Geräteglas und sind durch Schliffverbindungen vakuumdicht und lösbar miteinander verbunden.

Das Vakuum- und Schutzgassystem 14 weist einen Behälter 42, wie eine Druckgasflasche für ein Schutzgas, wie Stickstoff oder ein Edelgas, z.B. Argon auf. Der Behälter 42 ist über eine Druckreduzierventilanordnung 44 sowie Absperrventile 46, 48 mit einer zur Druckstabilisierung dienenden Tauchrohranordnung 50, die als Sperrflüssigkeit z.B. Glyzerin oder Hg enthalten kann, verbunden. Hierauf folgen, in Strömungsrichtung zum Gehäuse 20 hin, ein Absperrventil 52, ein erster Trockenturm 54, der z.B. Kieselgel enthalten kann, ein Absperrventil 56, ein Strömungsmeßrohr 58, ein Absperrventil 60, ein Absperrventil 62, ein zweiter Trockenturm 64, der z.B. ein Molekularsieb (4Å, Merck, Darmstadt) enthalten kann, ein Absperrventil 66, ein Glasrohrfederelement 68, eine Kühlfalle 70, die z.B. mit flüssigem Stickstoff gekühlt sein kann, ein Regelventil 72 und ein Absperrventil 74. An die Verbindung der Ventile 72 und 74 ist ein Manometer 76 über ein Absperrventil 78 angeschlossen.

An die Verbindung der Ventile 46 und 48 ist ein erster Anschluß eines Dreiwege-Ventils 80 angeschlossen, dessen zweiter Anschluß in der Atmosphäre mündet und dessen dritter Anschluß mit der Verbindung des Strömungsmeßrohres 58 und dem Ventil 60 verbunden ist, sodaß die Einheiten 50, 54 und 58 überbrückt werden können. Die Verbindung der Ventile 60 und 62 ist einerseits über ein Überbrückungsventil 82, das den Trochentüren 64 zu überbrücken gestattet, mit der Verbindung zwischen dem Ventil 66 und dem Glasrohrfederelement 68 und andererseits über ein Ventil 84 mit einer nicht dargestellten Vakuumpumpe (VP) verbunden.

Das Meßgefäß 36 ist über eine durch Ventile 106, 108 absperrbare Tauchrohranordnung 110 mit der Atmosphäre verbunden.

Das beschriebene Schutzgas- und Vakuumsystem ermöglicht Messungen sowohl im Vakuum als auch in einer Schutzgasatmosphäre, die gewünschtenfalls unter einem gewissen Überdruck, z.B. zwischen 2 bis 10 kPa, stehen kann.

Der in Fig. 2 dargestellte elektronische Regel-, Steuer-, Datenerfassungs-, Auswerte-, und Anzeigeteil enthält eine stabilisierte Stromversorgung 90, die vom Wechselstromnetz gespeist wird und die übrigen Schaltungsteile mit geregelter Spannung versorgt. Zur Baugruppe 12 gehören eine Thermostat- oder Cryostat-Regeleinheit 92, die einen oder mehrere, dem Meßgefäß 36 zugeordnete Thermostate oder Cryostate 94 regelt, die z.B. auch in Serie geschaltet sein können. Ferner gehören zur Baugruppe 12 ein Temperaturfühler 96 und ein digitales Temperaturmeßgerät 98.

Dem Meßteil 10 der elektronischen Waage ist ein Elektrowaage-Steuergerät 100 bekannter Bauart zugeordnet, an das ein Digitalvoltmeter 102 angeschlossen ist. Das Temperatur-Meßgerät 98 und das Voltmeter 102 sind mit einer Einheit 104 verbunden, die Datenerfassungs-, Steuer-, Auswerte-, Anzeige- und/oder Registriergeräte enthalten kann.

Die Baugruppe gemäß Fig. 2 ist vorzugsweise so ausgebildet, daß die Meßwerte für Gewicht bzw.

Masse und Temperatur sowohl visuell mit Hilfe von Digitalvoltmetern entsprechender Präzision angezeigt, mit Ein- oder Mehrkanalrecordern in Abhängigkeit von der Zeit registriert und/oder durch einen elektronischen Rechner erfasst, ausgewertet und mittels Drucker und/oder Plotter ausgegeben werden. Hierbei kann der Rechner auch als Programmsteuereinrichtung dienen, die den gewünschten Ablauf eines Dichtemeßexperiments steuert.

Das Meßgefäß 36 ist mehrmantelig ausgeführt, kann also z.B. zwei, drei oder vier Mäntel enthalten. Bei der in Fig. 3 dargestellten bevorzugten Ausführungsform ist der Innenraum 310 des Meßgefäßes, in dem sich die Auftriebsflüssigkeit 312 befindet, von einem doppelwandigen Innenmantel 314 umgeben, der zur Thermostatisierung der Auftriebsflüssigkeit 312 dient und einen Zulaufstutzen 316 sowie einen Ablaufstutzen 318 hat, die über entsprechende, in Fig. 1 dargestellte Schlauchleitungen mit einem oder mehreren, z.B. in Serie geschalteten Thermostaten oder Kryostaten oder einer anderen Temperatursteuereinrichtung der Baugruppe 12 verbunden sind. Das Meßgefäß 36 kann mit einer Magnetrühreranordnung (nicht dargestellt) zum Umrühren der Auftriebsflüssigkeit 312 versehen sein. Der Innenmantel 314 ist durch einen nach Art eines Dewar-Gefäßes ausgebildeten evakuierten Außenmantel 320 gegen die Außenatmosphäre isoliert.

Gemäß einem Merkmal der Erfindung ist das Meßgefäß 36 mit einem Manipulier-Rohrstutzen 322 versehen, der sich von dem oberen Bereich der Innenwand des Meßgefäßes 36 schräg nach oben erstreckt und ein z.B. mit einem Schliff 324 versehenes äußeres Ende aufweist, das mit einer entsprechenden Schliffkappe 326 bzw. einem Ventilkopf dicht verschließbar ist. Der Rohrstutzen 322 kann auch zur Einführung einer Kanüle zum Ändern oder Austauschen der Auftriebsflüssigkeit dienen. Im unteren Teil des Meßgefäßes 36 ist ein von außen durch die Mäntel 314, 320 in das Innere des Innenraumes 310 reichendes, innen geschlossenes Rohr 328 vorgesehen, das zum Einführen einer Temperaturmeßsonde (nicht dargestellt) dient und mit einer geeigneten Kopplungsflüssigkeit gefüllt wird, die bei Tieftemperaturversuchen einen entsprechenden niedrigen Erstarrungspunkt hat und z.B. aus Methanol, Ethanol, Toluol, Isopentan und dergl. bestehen kann, während für Hochtemperaturversuche eine Flüssigkeit mit hohem Siedepunkt, z.B. Glycol, Glycerin, Siliconöl usw. verwendet wird. Als Temperaturmeßsonde kann z.B. ein Widerstandsthermometer oder ein Thermoelement verwendet werden. Das geschlossene innere Ende des Rohres 328 befindet sich in der Auftriebsflüssigkeit 312 in nächster Nähe einer unteren Waagschale 330 des Meßgehänges, die bei einer Messung in die Auftriebsflüssigkeit 312 eintaucht. Die untere Waagschale 330 ist über einen dünnen Draht mit einer oberen Waagschale 332 verbunden, die sich oberhalb des Spiegels der Auftriebsflüssigkeit 312 befindet und über den dünnen Draht 32a mit dem Waagbalken 28 (Fig. 1) verbunden ist.

Das Meßgefäß 36 kann außerdem noch mit einem Gasauslaßstutzen 334 versehen sein, der einen Absperrhahn oder ein Ventil 336 enthält. Das obere Ende des Meßgefäßes ist z.B. über eine Schliff- oder Flanschverbindung 338 mit dem unteren Ende des Schutzrohres 38 verbunden.

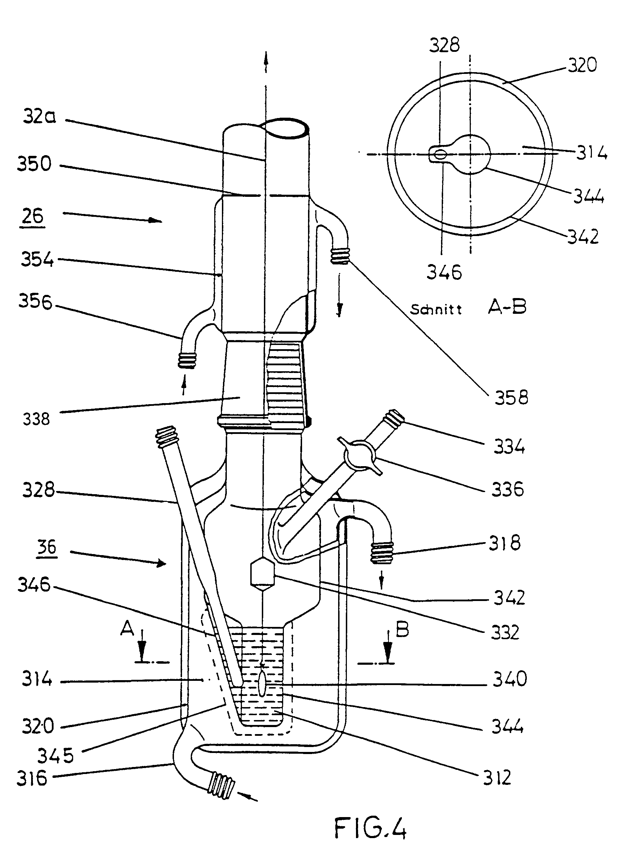

Fig. 4 zeigt ein abgewandeltes Meßgefäß, das sich speziell zur Messung der Dichte minimaler Flüssigkeitsmengen mit Hilfe eines Schwimmers 340 bekannten Volumens und bekannter Dichte eignet, der im Meßgehänge an die Stelle der unteren Waagschale 330 (Fig. 3) tritt. Das Meßgefäß hat hier eine Innenwand 342, die sich im unteren Teil zu einem rohrartigen Ansatz 344 kleinen Durchmessers verengt, der die als Auftriebsflüssigkeit für den Schwimmer 340 wirkende Probenflüssigkeit 312 aufnimmt und beispielsweise ein Volumen von etwa 6 cm³ oder etwas mehr haben kann. Der rohrartige Ansatz 344 hat eine sich schräg nach oben erweiternde seitliche Ausbuchtung 346 zur Aufnahme des hier, zwecks kompakter Bauweise, steil nach oben verlaufenden Temperaturmeßsondenrohres 328. Der Innenmantel 314 hat im Bereich des rohrförmigen Ansatzes 344 eine relativ große radiale Dicke und bildet dadurch ein relativ großes thermisches Puffervolumen. Bei einer z.B. viermanteligen Ausführungsform des Meßgefäßes kann ferner das eigentliche Meßvolumen hier und bei Fig. 3 zweckmäßig durch ein zusätzliches Puffervolumen 345 mechanisch-thermisch zusätzlich isoliert und gegen eventuelle mechanische und/oder thermische Fluktuationen abgeschirmt werden, wie in Fig. 4 gestrichelt angedeutet ist. Das Puffervolumen hat einen Füllstutzen (nicht dargestellt) und kann ein Magnetrührelement enthalten. Im übrigen entspricht das Meßgefäß gemäß Fig. 4 dem der Fig. 3.

Fig. 5 zeigt den unteren Teil des Schutzrohres 38, der eine Ausführungsform der erfindungsgemäßen Separator- oder Trennvorrichtung enthält, die in thermodynamischem Sinne als quasiadiabatische, semipermeable Wand wirkt. Die Trennvorrichtung 26 enthält eine Blende 350, die ein relativ enges Loch 352 aufweist, durch das sich der Draht 32a des Meßgehänges erstreckt. Das Loch 352 kann die Form eines Kreises, Ovals, Dreiecks, Vierecks, Fünfecks usw. oder vorzugsweise die Form eines Schlitzes oder eines Kreuzschlitzes haben. Die Blende 350 trennt den das Meßgefäß 36 und den sich daran anschließenden Teil des Schutzrohres 38 umfassenden Meßraum von dem das Meßsystem der Waage enthaltenden Wägeraum 22. Das Schutzrohr 38 ist auf der Meßraumseite der Blende 350 mit einem Kühlmantel 354 umgeben, der einen Zulaufstutzen 356 und einen Ablaufstutzen 358 zum Hindurchleiten eines Kühlfluids aufweist und dazu dient, die im Meßraum entstehenden Dämpfe der Auftriebsflüssigkeit zu kondensieren und in Verbindung mit der Blende 350 an einem übertritt in den Wägeraum 22 zu hindern. Dem Kühlmantel 354 ist im unteren Teil des Schutzrohres 38 ein Kondensatsammler 360 zugeordnet, an den eine Kondensatableitung 362 in Form eines dünnen Glasröhrchens angeschlossen ist, welches einen wendelförmigen Teil 364 aufweist und in dem in Fig. 5 nicht dargestellten Meßgefäß 36 unterhalb des Spiegels der in diesem enthaltenen Auftriebsflüssigkeit mündet, so daß die Kondensatrückführung möglichst wenig Störungen verursacht.

Durch das relativ lange Schutzrohr 38 wird ein Wärmeübergangsbereich zwischen dem thermisch isolierten eigentlichen Meßraum 36 einerseits und dem gehäuse hauptteil 20a bzw. Wägeraum 22 geschaffen, so daß sich die als asymmetrisches Sperrventil arbeitende Trennvorrichtung 26 praktisch auf der Temperatur des Wägeraums befindet, selbst wenn durch den Kondensator ein gewisser Temperaturabfall am Schutzrohr 38 erzeugt wird.

Im Betrieb wird an der Blende 350 vorzugsweise ein gewisser Druckabfall in Richtung vom Wägeraum 22 zum Meßraum 24 von etwa 0 bis 10 kPa, vorzugsweise etwa 0,2 bis 2 kPa aufrechterhalten.

Die als Beispiel beschriebene Separator- oder Trennvorrichtung 26 wirkt als quasiadiabatische, semipermeable Wand, die den Meßraum 24 thermodynamisch effektiv vom Wägeraum 22 trennt und als eine Art von in nur einer Richtung und nur von ganz bestimmten, permanent gasförmigen Komponenten passierbares, stofflich semipermeables, thermodynamisch quasi-adiabatisches Sperrventil wirkt. Es trennt den Wägeraum in thermodynamischer Hinsicht vom Meßraum, so daß sowohl im Hauptteil 20a des Gehäuses, welches die eigentliche Meßvorrichtung enthält, genau auch im Schutzrohr 34, das das Wägegehänge 30 enthält, genau definierte, insbesondere konstante Druck- und Temperaturbedingungen herrschen, also z.B. auch konstante Auftriebsverhältnisse im Bereich des Wägegehänges.

Die erfindungsgemäße semipermeable, quasiadiabatische, asymmetrische Sperrvorrichtung kann auch auf andere Weise realisiert werden, z.B. kann die Blende 350 aus einer Sintermaterialplatte bestehen, die eine Durchbrechung für den Draht des Meßgehänges hat.

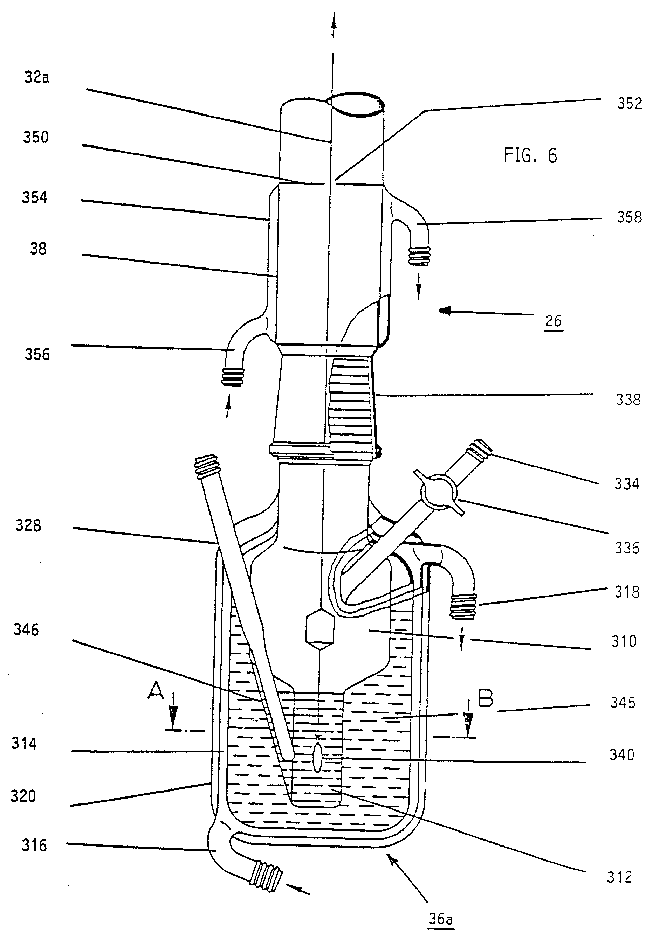

In den Fig. 6 und 7 ist ein Viermantel-Meßgefäß 36 a dargestellt, das ähnlich ausgebildet ist wie das Meßgefäß gemäß Fig. 4. Das Meßgefäß 36a enthält eine Meßkammer 310, die von einer ein großvolumiges Püffervolumen bildenden Pufferkammer 345 umgeben ist, welche am oberen Ende ein Füllrohr aufweist, das ähnlich ausgebildet sein kann, wie der Rohrstützen 322 in Fig. 3. Die Pufferkammer 345 wird mit einer Flüssigkeit geeigneter Erstarrungs- bzw. Siedetemperatur gefüllt. Die Flüssigkeit in der Puffer-

kammer 345 isoliert den Innenräumen 310 des Meßgefäßes zusätlich gegen äußere mechanische und-/oder thermische Störungen und trägt dadurch zur Stabilisierung der Meßbedingungen bei. Im übrigen entspricht das Meßgefäß 36a dem gemäß Fig. 4.

Das Waagengehäuse sowie die Meß- und Wägegefäße sowie die Bauteile der Sperrvorrichtung bestehen bei den beschriebenen Ausführungsformen aus Geräteglas. Es können selbstverständlich auch andere Materialien, wie Quarz und/oder Porzellan und/oder Keramik und/oder Metall, wie z.B. Kupfer, Messing, Aluminium, rostfreier Stahl, Titan usw. und/oder Kunststoffe, wie z.B. PTFE, PVC, Polyamid, Polyformaldehyd, Polyester, Gießharz, Polyurethan, Polyaramid, Polyvinylcarbazol usw. verwendet werden. Je nach Material kann man dann statt der beschriebenen Schliffverbindungen auch andere Verbindungsvorrichtungen, wie Flanschverbindungen u.a.m. verwenden.

Bei der Bestimmung der Dichte einer festen Substanz wird diese zuerst in der oberen Waagschale 332 (Fig. 3) außerhalb der Auftriebsflüssigkeit 312 und dann in der unteren Waagschale 330 innerhalb der Auftriebsflüssigkeit 312 gemessen und aus der Differenz der dabei ermittelten Gewichte wird die Dichte in bekannter Weise errechnet. Zur Eichung können Eichnormale in Form von kleinen, aus in der Tauchflüssigkeit unlöslichem Material hergestellten Tauchkörpern von einfacher geometrischer Form verwendet werden. Als Eichnormal bevorzugt werden getemperte Quarzglaszylinder, deren Oberflächen mit höchster Präzision geschliffen und poliert sind und deren Volumen durch z.B. laserinterferometrische Messungen mit höchster Genauigkeit ermittelt werden kann.

Wie erwähnt, wird man im allgemeinen während einer Messung eine Druckdifferenz an der Trennvorrichtung 26 aufrechterhalten, insbesondere den Wägeraum auf einem etwas höheren Druck halten, als den Meßraum. Dies läßt sich mit dem System 14 einfach dadurch erreichen, daß man die Tauchrohranordnung 50 auf einen höheren Druck einstellt, als die Tauchrohranordnung 110, so daß das Schutzgas durch die Blende strömt und dort den gewünschten Druckabfall verursacht.

Das oben beschriebene Ausführungsbeispiel läßt sich selbstverständlich in der verschiedensten Weise abwandeln. In den Tauchrohranordnungen können als Sperrflüssigkeiten außer Glycerzin oder Quecksilber auch Siliconöl und dergl. verwendet werden. Die Temperierung des Meßgefäßes kann auch durch eine induktive Hochfrequenzheizung, durch eine elektrische Widerstandsheizung, durch eine Strahlungsheizung oder eine Kombination solcher Heizvorrichtungen erfolgen und zur Kühtung können auch Pellier-Elemente u.a.m. dienen. Die Regelung des Schutzgasdruckes und des Druckabfalles an der Trennvorrichtung können auch auf andere bekannte Weise als durch die beschriebenen Tauchrohranordnungen erfolgen, z.B. durch Manostate, Manostatschatlungen, Druckminderventile usw. Im Vertaufe einer Messung der Abhängigkeit der Dichte einer Probe von der Temperatur kann die Auftriebsflüssigkeit diskontinuierlich oder auch kontinuierlich nach Stoffart, Menge und Zusammensetzung geändert oder gegebenenfalls auch völlig ausgetauscht werden, was beispielsweise durch Anwendung von Unter- oder überdruck, z.B. mit Hilfe von Saug- und/oder Druckpumpen und/oder geeigneten Anschlußleitungen am Meßgefäß erfolgen kann. Am Meßgefäß können auch mehrere Temperaturmeßsonden und/oder mehrere Manipulationsansätze und/oder mehrere absperrbare Verbindungen zur Außenatmosphäre vorgesehen sein. Die asymmetrische Sperrvorrichtung kann auch mehrere, hintereinander angeordnete Blenden und/oder Kühlvorrichtungen und/oder Kondensatrückführungsvorrichtungen, Baffles usw. enthalten.

## Ansprüche

1. Einrichtung zur Bestimmung der Dichte kondensierter Stoffe nach der hydrodynamischen Auftriebsmethode mit einer Waage, welche einen Kraftgeberteil (10) und einen an diesem durch ein Verbindungselement (32a) aufgehängtes Meßgehänge (32) enthält, ferner mit einem gasdichten Gehäuse (20), welches einen Wägeraum (22), in dem der Kraftgeberteil (10) der Waage angeordnet ist, und einen Meßraum (24) mit einem zur Aufnahme einer Auftriebsflüssigkeit (312) dienenden Meßgefäß (36), in das sich das Meßgehänge (32) erstreckt, bildet, mit einem Vakuum-system (VP), das an den Wägeraum angeschlossen ist, und mit einer Trennvorrichtung (26), die zwischen dem Meßraum (24) und dem Wägeraum (22) angeordnet ist und vom Verbindugselement (32a) des Meßgehänges (32) durchsetzt ist, dadurch gekennzeichnet, daß die Trennvorrichtung auf der dem Wägeraum (22) zugewandten Seite dynamisch mit einem Druckregel-System (50), das im Wägeraum (22) einen konstanten Schutzgasdruck aufrechtzuerhalten gestattet, verbunden und auf der dem Meßraum zugewandten Seite mit einer Kühlvorrichtung (354) zur Abscheidung von Dämpfen der Auftriebsflüssigkeit (312) versehen ist, wodurch der übertritt von Dämpfen der Auftriebsflüssigkeit (312) vom Meßraum (24) in den Wägeraum (22) verhindert, ein Austausch von permanentem Schutzgas zwischen Wägeraum (22) und Meßraum (24) selbsttätig möglich ist.

2. Einrichtung. nach Anspruch 1, **dadurch gekennzeichnet**, daß die Trennvorrichtung mindestens eine Blende (350) mit einer vom Verbindungselement (32a) durchsetzten Öffnung (352) enthält.

3. Einrichtung nach Anspruch 2, **dadurch**

gekennzeichnet, daß die Öffnung (352) der Blende die Form eines Schlitzes hat.

4. Einrichtung nach Anspruch 2, **dadurch gekennzeichnet,** daß die Öffnung (352) der Blende (350) die Form eines Kreuzschlitzes hat.

5. Einrichtung nach einem der vorhergehenden Ansprüche, **dadurch gekennzeichnet,** daß der Kühlvorrichtung (354) eine Kondensatsammelvorrichtung (360) zugeordnet ist.

6. Einrichtung nach Anspruch 5, **dadurch gekennzeichnet,** daß die Kondensatsammelvorrichtung (360) mit einer Vorrichtung (362) zum störungsfreien Rückführen von Kondensat in das Meßgefäß (36) versehen ist.

7. Einrichtung nach einem der vorhergehenden Ansprüche, **dadurch gekennzeichnet,** daß das Meßgefäß (36) mit mindestens einem dicht verschließbaren Manipulationsansatz (322) versehen ist.

8. Einrichtung nach einem der vorhergehenden Ansprüche, **dadurch gekennzeichnet,** daß das Meßgefäß mit mindestens einem in sein Inneres vorspringenden Temperaturmeßsondenrohr (28, 328) versehen ist.

9. Einrichtung nach einem der vorhergehenden Ansprüche, **dadurch gekennzeichnet,** daß das Meßgefäß in seinem unteren Teil (344) einen verkleinerten Querschnitt aufweist.

10. Einrichtung nach einem der vorhergehenden Ansprüche, **dadurch gekennzeichnet,** daß das Meßgefäß mehrmantelig ausgebildet ist.

11. Einrichtung nach Anspruch 10, **dadurch gekennzeichnet,** daß das Meßgefäß mindestens einen Thermostatisiermantel (314) und mindestens einen außerhalb von diesem angeordneten Isoliermantel (320) enthält.

12. Einrichtung nach einem der vorhergehenden Ansprüche, **dadurch gekennzeichnet,** daß der die Auftriebsflüssigkeit (312) enthaltende Teil des Meßgefäßes mit einer Kammer (345) umgeben ist, welche eine Pufferflüssigkeit enthält.

13. Einrichtung nach einem der vorhergehenden Ansprüche, **dadurch gekennzeichnet,** daß der Meßraum (24) mit einer Druckregelvorrichtung verbunden ist.

14. Einrichtung nach einem der vorhergehenden Ansprüche **gekennzeichnet durch** eine Anordnung zur Änderung der Auftriebsflüssigkeit (312).

15. Einrichtung nach einem der vorhergehenden Ansprüche, **gekennzeichnet** durch eine Anordnung (50, 110), die den Gasdruck an der Wägeraumseite der Trennvorrichtung (26) gleich dem oder größer als den Druck an der Meßraumseite der Trennvorrichtung hält.

## Claims

1. Apparatus for determining the density of condensed materials according to the hydrodynamic buoyancy method with a balance, which includes a force-applying part (10) and a measuring pendant (32) suspended thereon by a connecting element (32a), further with a gas tight housing (20) which forms a weighing chamber (22), in which the force-applying part (10) of the balance is arranged, and a measuring chamber (24) with a measuring vessel (36) for reception of a buoyancy liquid (312), into which the measuring pendant (32) extends, with a vacuum system (VP) which is connected to the weighing chamber and with an isolating device (26), which is arranged between the measuring chamber (24) and the weighing chamber (22) and is traversed by the connecting element (32a) of the measuring pendant (32), characterized in that the isolating device (26) is dynamically connected on the side towards the weighing chamber (22) to a pressure regulating system (50), which permits a constant protective gas pressure to be maintained in the weighing chamber (22), and is provided on the side towards the measuring chamber with a cooling device (354) for precipitating vapour of the buoyancy liquid (312), whereby the transfer of vapour of the buoyancy liquid (312) from the measuring chamber (24) into the weighing chamber (22) is prevented but an exchange of permanent protective gas between weighing chamber (22) and measuring chamber (24) is automatically possible.

2. Apparatus according to claim 1, characterized in that the isolating device includes at least one stop (350) with an opening through which the connecting element (32a) passes.

3. Apparatus according to claim 2, characterized in that the opening (352) of the stop has the form of a slot.

4. Apparatus according to claim 2, characterized in that the opening (352) of the stop (350) has the form of a cross-shaped slot.

5. Apparatus according to one of the preceding claims, characterized in that a condensate collection device (360) is associated with the cooling device (354).

6. Apparatus according to claim 5, characterized in that the condensate collection device (360) is provided with a device (362) for returning condensate to the measuring vessel (36) without disturbance.

7. Apparatus according to one of the preceding claims, characterized in that the measuring vessel (36) is provided with at least one manipulation neck (322) which can be closed tight.

8. Apparatus according to one of the preceding claims, characterized in that the measuring vessel is provided with at least one temperature measurement probe tube (28, 328) projecting into its interior.

9. Apparatus according to one of the preceding claims, characterized in that the measuring vessel has a reduced cross-section in its lower part (344).

10. Apparatus according to one of the preceding claims, characterized in that the measuring vessel is multi-walled.

11. Apparatus according to claim 10, characterized in that the measuring vessel has at least one temperature equalising wall (314) and at least one insulating wall (320) arranged outside the same.

12. Apparatus according to one of the preceding claims, characterized in that the part of the measuring vessel containing the buoyancy liquid (312) is surrounded by a chamber (345) which contains a buffer liquid.

13. Apparatus according to one of the preceding claims, characterized in that the measuring chamber (24) is connected to a pressure regulating device.

14. Apparatus according to one of the preceding claims, characterized by an arrangement for changing the buoyancy liquid (312).

15. Apparatus according to one of the preceding claims, characterized by an arrangement (50, 110) which maintains the gas pressure on the weighing chamber side of the isolating device (26) equal to or greater than the pressure on the measuring chamber side of the isolating device.


**Revendications**

1. Dispositif de mesure de la densité de substances condensées suivant la méthode de portance hydrodynamique, avec une balance qui contient une partie de capteur de force (10) et une suspension de mesure (32) accrochée à celui-ci grâce à un élément de liaison (32a), avec en outre un carter étanche aux gaz (20), qui forme une enceinte de pesée (22) dans laquelle est disposée la partie de capteur de force (10) de la balance, et une enceinte de mesure (24) avec un récipient de mesure (36) servant à recevoir un liquide de flottation (312), dans laquelle s'étend la suspension de mesure (32), avec un système à vide (VP), qui est raccordé à l'enceinte de pesée et avec un dispositif de séparation (26) qui est disposé entre l'enceinte de mesure (24) et l'enceinte de pesée (22) et qui est traversé par l'élément de liaison (32a) de la suspension de mesure (32), caractérisé en ce que, du côté tourné vers l'enceinte de pesée (22), le dispositif de séparation et relié dynamiquement à un système de réglage de pression (50) qui permet de maintenir une pression constante d'un gaz de protection dans l'enceinte de pesée (22), et est pourvu, du côté tourné vers l'enceinte de mesure, d'un dispositif de refroidissement (354) en vue de séparer les vapeurs du liquide de flottation (312), faisant qu'est empêché le déversement des vapeurs du liquide de flottation (312), de l'enceinte de mesure (24) à l'enceinte de pesée (22), un échange de gaz de protection permanent étant possible automatiquement entre l'enceinte de pesée (22) et l'enceinte de mesure (24).

2. Dispositif selon la revendication 1, caractérisé en ce que le dispositif de séparation contient au moins un diaphragme (250) avec un orifice (352) traversé par l'élément de liaison (32a).

3. Dispositif selon la revendication 2, caractérisé en ce que l'orifice (352) du diaphragme présente la forme d'une fente.

4. Dispositif selon la revendication 2, caractérisé en ce que l'orifice (352) du diaphragme (350) est une fente cruciforme.

5. Dispositif selon l'une des revendications précédentes, caractérisé en ce qu'un dispositif de collecte de condensat (360) est associé au dispositif de refroidissement (354).

6. Dispositif selon la revendication 5, caractérisé en ce que le dispositif de collecte de condensat (360) est pourvu d'un dispositif (362) pour retourner sans entrave le condensat dans le récipient de mesure (36).

7. Dispositif selon l'une des revendications précédentes, caractérisé en ce que le récipient de mesure (36) est pourvu d'au moins un appendice de manipulation (322) susceptible d'être obturé de façon hermétique.

8. Dispositif selon l'une des revendications précédentes, caractérisé en ce que le récipient de mesure est pourvu d'au moins un tube de sonde de mesure de température (28, 328) faisant saillie intérieurement.

9. Dispositif selon l'une des revendications précédentes, caractérisé en ce que le récipient de mesure présente dans sa partie inférieure (344) une section transversale diminuée.

10. Dispositif selon la revendication 10, caractérisé en ce que le récipient de mesure est réalisé avec plusieurs enveloppes.

11. Dispositif selon l'une des revendications précédentes, caractérisé en ce que le récipient de mesure contient au moins une enveloppe à réglage thermostatique (314) et au moins une enveloppe isolante (320) disposée à l'extérieur de celle-ci.

12. Dispositif selon l'une des revendications précédentes, caractérisé en ce que la partie du récipient de mesure qui contient le liquide de flottation (312) est entourée d'une chambre (345) qui contient un liquide tampon.

13. Dispositif selon l'une des revendications précédentes, caractérisé en ce que l'enceinte de mesure (24) est reliée à un dispositif de réglage de pression.

14. Dispositif selon l'une des revendications précédentes, caractérisé par un dispositif servant à changer le liquide de flottation (312).

15. Dispositif selon l'une des revendications précédentes, caractérisé par un dispositif (50, 110) qui maintient la pression de gaz, du côté de l'enceinte de pesée du dispositif de séparation (26), égale ou supérieure à la pression du côté de l'enceinte de mesure
du dispositif de séparation.

FIG.1

EP 0 215 302 B1

220V ~

Stabilisator — 90

92 Thermostat –/
Kryostat –
Regeleinheit

94 Thermostat /
Kryostat

100 Elektrowaage-
Steuergerät

Elektrowaage — 10

Digitales
T-Messgerät — 98

Pt 100

96

Digital-
Voltmeter

102

104 Schreiber /
Controller

FIG. 2

FIG. 7

328

320

314

312

346

345

FIG.3

328
320

314

344

342

346

Schnitt   A-B

32a
350
26
354
356
338
358
328
36
346
314
320
345
316

A

B

334
336
318
342
332
340
344
312

FIG.4

FIG.5

FIG. 6